# EUROPEAN PATENT APPLICATION

(11) **EP 4 821 334 A1**
(43) Date of publication of application: **14.10.2026**
(21) Application number: 25169407.1
(22) Date of filing: 09.04.2025
(51) Int. Cl.: A01B 61/04

(54) **SUBSOILING APPARATUS**

(71) Applicant: NHS Maskinfabrik A/S, 8600 Silkeborg (DK)
(72) Inventor: Husted, Ejner Bøjlesen, 2800 Kongens Lyngby (DK); Husted, Anders, 2800 Kongens Lyngby (DK)
(74) Representative: Høiberg P/S

(57) **Abstract**

A subsoiling device (100) is disclosed comprising one or more teeth (10) pivotable between a working and a transport position by means of one or more actuators (20). The subsoiling device (100) additionally comprises a mechanical overload protection mechanism (12).

## Description

### Technical field

The present invention relates generally to the field of agricultural equipment, more specifically to the field of ploughs and tillers for deep subsoiling conditioning of the soil.

### Background

Naturally occurring geological phenomena as well as subjecting an agricultural field to heavy agricultural machinery such as tractors may result in compression of the soil which in turn hinders natural drainage of rainwater from the surface. Such drainage is important for providing optimal growth conditions for the crops by letting rainwater reach the roots without trapping it at the surface, which may cause the plants to drown.

Natural conditions, such as acidic conditions can over time cause sand grains in the soil to be cemented together by precipitated iron and aluminum oxides and organic matter, forming hardpan, which is a dense layer of soil, usually found below the uppermost topsoil layer. Hardpan is generally a distinct soil layer, usually strongly reddish or black, which can be water and root-resistant. Some hardpans are formed by deposits in the soil that fuse and bind the soil particles. These deposits can range from dissolved silica to matrices formed from iron oxides and calcium carbonate.

A common method for alleviating such soil compression or formation of hardpan is by aerating the soil using a class of agricultural equipment known as subsoilers. These provide a deep tillage by means of one or more teeth extending into the ground, breaking up the compressed soil down to depths exceeding 30 cm without leaving trenches.

A common issue in subsoiling arises when a tooth hits a large underground rock. If nothing has been done to protect the device, such a situation may result in serious damage to tooth or the subsoiler apparatus itself as it absorbs the impact of the collision. It is therefore typical to include some safety overload protection for eliminating the damage of a collision, which will be triggered upon exceeding a suitable force on the tooth and can be reset afterwards.

Traditionally, subsoilers have been separated into two groups: Mechanical and more modernly hydraulic subsoilers, both of which are commonly mounted on a tractor. Mechanical subsoilers are characterized by their teeth being manually or mechanically positioned and often include a shear bolt or safety bolt to ensure that the teeth and apparatus itself are unharmed by collisions with rocks or other heavy objects during tilling. A shear bolt is an inexpensive bolt fastening the tooth to the apparatus with a strength suitable for breaking upon collision, thus causing the tooth to pivot out of the ground to avoid damage.

Hydraulic subsoilers are characterized by their teeth being hydraulically positioned (often controllable by the driver during tillage) by means of one or more pistons. The working position of the teeth is controlled by the pressure inside this one or more pistons, while the collision safety is achieved by having an pressure relief valve on each piston, which will blow if the force on the tooth exceeds an appropriate limit.

A hydraulic subsoiling device known from prior art is disclosed in DK 163201 B. Here, the working position of the single tooth can be continuously controlled by the pressure inside the hydraulic actuator.

It is an object of the present invention to provide a hydraulic subsoiling device with an improved stability of the working depth of the subsoiling tooth or teeth during operation of the device.

### Summary

The subject of the present disclosure is a subsoiling apparatus utilizing combined mechanical and actuated, such hydraulically actuated, positioning of the one or more teeth as well as a mechanical overload protection to protect the tooth and apparatus itself during operation.

In one embodiment of the present disclosure, the subsoiling apparatus comprises a frame with a front end having a coupling for connecting the subsoiling apparatus to an agricultural tractor. The subsoiling apparatus further comprises one or more teeth, each being arranged on the frame. Each of the teeth can pivot between a transportation position, where a tip of the tooth is directed towards the front end of the frame and a working position, wherein the tip of the tooth is directed downwardly from the frame. In the transportation position, the tooth is entirely out of the ground, whereas the working position is characterized by having a working depth and a working angle. Additionally, the subsoiling apparatus comprises an actuator, such as a double-acting hydraulic actuator comprising a cylinder and a piston, for each of the teeth arranged for shifting the tooth from the transportation position and towards the working position. Each tooth is provided with a mechanical overload protection designed to release the tooth from the working position and allow it to pivot further from the transportation position than the working position thereof in case the mechanical load on the tooth exceeds a given threshold value, and with a mechanical stop block arranged to prevent the tooth from pivoting further from the transportation position than the working position thereof provided that the mechanical overload protection of the tooth has not released the tooth.

By providing a mechanical stop block to prevent the tooth from pivoting further, the working depth of the tooth is maintained during operation of the device regardless of the resistance force the tooth meets while being pulled through the soil. The resistance may vary during operation with varying characteristics and compositions of the soil as well as varying degrees of compression and speed of the agricultural tractor. However, with the addition of the mechanical block stop, an overload protection of the tooth cannot be provided from an arrangement of the hydraulic actuator, such as a pressure relief valve. Instead, a mechanical overload protection is provided to ensure that the tooth is not damaged by e.g. a collision with a rock in the soil and to ensure that the device does not get stuck in the soil.

In another embodiment of the present disclosure, the at least one of the one or more teeth is mounted on the frame by means of adjustable clamps enabling the lateral position of the at least one of the one or more teeth on the frame to be adjusted.

In an embodiment of the present disclosure, the hydraulic system for transferring the one or more teeth between the working position and the transportation position comprises one double-acting hydraulic actuator per tooth, each double-acting hydraulic actuator comprising a cylinder and a piston.

In an embodiment of the present disclosure, the actuator is a double-acting hydraulic actuator. For each of the one or more teeth, the mechanical stop block for controlling and maintaining the working depth comprises an exchangeable muff configured to be placed on the hydraulic piston of the double-acting hydraulic actuator to maintain the working angle of the tooth.

In an embodiment of the present disclosure, the muff comprises a plurality of sections that can be optionally inserted between the cylinder and the tooth to adjust the working angle of the tooth.

In an embodiment of the present disclosure, mechanical overload protection comprises a shear bolt for each of the one or more teeth, configured to break if the force perpendicular to its axis exceeds the strength of the shear bolt, wherein the strength of the shear bolt is configured to be below a force where any part of the subsoiling apparatus is damaged.

In an embodiment of the present disclosure, the actuator is a double-acting hydraulic actuator. Each of the one or more teeth is connected directly or indirectly to the piston of the double-acting hydraulic actuator by means of the shear bolt and a stronger pivot bolt, such that the force from pulling the tooth through the soil will cause the tooth to pivot around the pivot bolt and be lifted above the ground if the shear bolt breaks.

In an embodiment of the present disclosure, the one or more teeth are composed of steel.

In an embodiment of the present disclosure, each of the one or more teeth additionally comprise at least one exchangeable wear piece configured to be replaced when worn down. In a further embodiment, the tip of each of the one or more teeth is characterized by being a wear piece configured to be replaced when worn down.

In an embodiment of the present disclosure, the subsoiling apparatus comprises two or more teeth. In a further embodiment, the two or more teeth can be transferred between the transportation position and the working position individually so that at least one tooth can be in the transportation position while at least one tooth is in the working position.

In an embodiment of the present disclosure, the mechanical stop block is configured to maintain the working angle of each of the one or more teeth in the range of 25° to 50°, such as in the range of 30° to 45°, such as in the range of 35° to 40°. In a further embodiment, the mechanical stop block is configured to maintain the working angle of each of the one or more teeth at 37° ± 2°.

In an embodiment of the present disclosure, each of the one or more teeth has a working depth in the range of 40 to 65 cm, such as in the range of 45 to 60 cm, such as in the range of 50 to 55 cm. In a further embodiment, each of the one or more teeth has a working depth of 55 cm ± 2 cm. This is deeper than traditional subsoiling apparatuses and ensures a more thorough aeration of the soil.

### Description of Drawings

**Fig. 1****:** Schematic drawing of the subsoiling apparatus seen obliquely from the top in an embodiment of the present disclosure, where the number of teeth is four.
**Fig. 2****:** Schematic side view drawing of a tooth arranged on the frame of the subsoiling device in one or more embodiments of the present disclosure.
**Fig. 3****:** Schematic side view drawing of a tooth arranged on the frame of the subsoiling device in one or more embodiments of the present disclosure, showing the pivoting of the tooth after the mechanical overload protection system has been triggered in dashed lines.

### Detailed description

Disclosed herein is a subsoiling apparatus 100 comprising a frame 30 configured to be attached to a tractor. The subsoiling apparatus 100 comprises one or more teeth 10 and an actuator 20 for each tooth for transferring the tooth 10 between a working position and a transportation position. Additionally, each tooth 10 comprises a mechanical overload protection system 12 configured to move the tooth 10 out of danger upon collision with a rock or another heavy object during operation to avoid damaging the tooth 10 or the subsoiling apparatus 100.

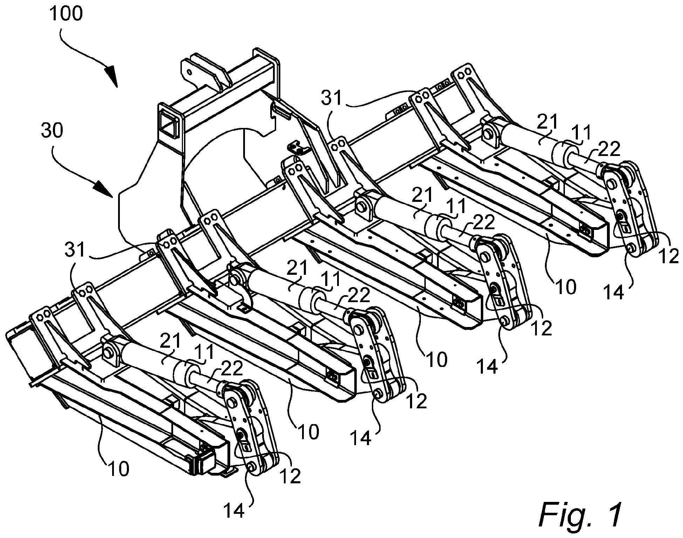

Fig. 1 shows a schematic drawing of the subsoiling apparatus 100 seen obliquely from above. Each of the four teeth 10 in the embodiment shown in Fig. 1 are attached to the frame 30 of the subsoiling apparatus 100 pivotably so that they can be moved between a working position and a transportation position, characterized by each of the teeth 10 being entirely above ground. The four teeth 10 in the embodiment in Fig. 1 are pivoted to the transportation position. With a transportation position, it is possible to mount the subsoiling apparatus in a location remote from the field in which it must be applied, and to lift the subsoiling apparatus out of the ground when crossing roads or other obstacles.

One advantage of an actuated system for transferring the one or more teeth 10 between the working position and transport position is the possibility for the driver of the tractor to control this transfer from the tractor cockpit while driving. In an embodiment of the present disclosure, the actuator for transferring the teeth 10 between the working position and the transportation position comprises one double-acting hydraulic actuator 20 per tooth 10, each double-acting hydraulic actuator 20 comprising a cylinder 21 and a piston 22.

In a further embodiment of the present disclosure, the at least one of the one or more teeth 10 is mounted on the frame 30 by means of adjustable clamps 31 enabling the lateral position of the at least one of the one or more teeth 10 on the frame 30 to be adjusted. This has the advantage of allowing the operator to modify the subsoiling process to their particular needs, for example enabling subsoiling in the wheel tracks of the tractor itself.

In an embodiment of the present disclosure, the subsoiling apparatus 100 comprises two or more teeth 10. In a further embodiment, the two or more teeth 10 can be transferred between the transportation position and the working position individually so that at least one tooth 10 can be in the transportation position while at least one tooth 10 is in the working position. This allows the operator to optimize the subsoiling process to the particular conditions, for example enabling subsoiling of a field consisting of very heavy soil by lifting one or more of the teeth 10 above the ground.

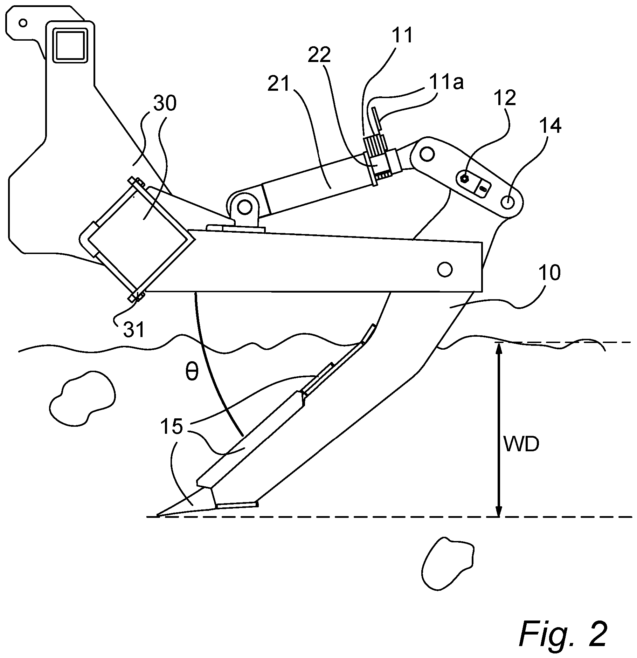

Fig. 2 shows a schematic side view of a tooth 10 in its working position. The working position is characterized by the working depth WD of the tip 13 of each tooth 10 as well as the working angle θ defined as the angle between each tooth 10 with the horizontal direction.

Each of the teeth 10 comprises a mechanical stop block for controlling and maintaining the working position. One advantage of employing a mechanical stop block is to maintain the correct working angle θ and working depth WD of the teeth 10 during operation.

The combination of the actuator 20 with the mechanical stop block 11 provides both convenient transfer between the positions of the one or more teeth 10 and a rigid and stable working position during operation. Prior art solutions have used the pressure inside a hydraulic actuator to maintain the working position of a tooth have shown issues with variable working angle and working depth due to the large forces acting on the tooth during operation. While this solution allows a seamless configuration of the working depth and angle, it entails a steep learning curve for the operator to familiarize themselves with the hydraulic pressure necessary to maintain the desired working conditions. Experience with these prior art subsoiling apparatuses has found that a seamless working angle / depth configuration is not necessary to achieve a high quality subsoiling. Rather, an optimum working depth in the vicinity of 55 cm and an optimum working angle in the vicinity of 37° has been identified. Therefore, the optimized subsoiling apparatus 100 of the present disclosure uses the mechanical stop block 11 to limit the angle during operation of each of the one or more teeth 10 to angles less than or equal to the desired working angle and the depth of the tip 13 of each of the one or more teeth 10 to depths less than or equal to the desired working depth. In one embodiment of the present disclosure, the mechanical stop block 11 comprises a muff 11 inserted around the piston 22 of the hydraulic actuator 20. In a further embodiment of the present disclosure, the muff 11 comprises a plurality of sections 11a that can be optionally inserted or left out to adjust the working angle θ and working depth WD of the tooth 10.

In an embodiment of the present disclosure, the mechanical stop block is configured to maintain the working angle θ of each of the one or more teeth in the range of 25° to 50°, such as in the range of 30° to 45°, such as in the range of 35° to 40°. In a further embodiment, the mechanical stop block is configured to maintain the working angle θ of each of the one or more teeth at 37° ± 2°. The significance of the working angle is to be understood in terms of force transfer between the tooth and the soil. If the working angle is too low, the friction force that must be overcome to move the tooth through the soil is not very high, thereby causing a relatively inefficient use of the tooth. On the contrary, if the working angle is high (nearing 90°), the force per length of tooth is very high, which may cause damage to the tooth itself or the joint, where it is connected to the remaining apparatus. Consequently, there is an optimal working angle or "angle of attack", where the force transfer is balanced with the strength of the tooth and apparatus construction.

In an embodiment of the present disclosure, each of the teeth 10 has a working depth WD in the range of 40 to 65 cm, such as in the range of 45 to 60 cm, such as in the range of 50 to 55 cm. In a further embodiment, each of the teeth 10 has a working depth WD of 55 cm ± 2 cm. This is considerably deeper than traditional subsoiling apparatuses in order to enable a more thorough aeration of the soil. The optimal working depth is determined by the minimum depth giving the desired drainage effect of the subsoiling process. This may depend on the soil being subsoiled due to a variation in density and/or thickness of present deposit layers and/or on crops meant to be raised in the field and their the optimal growth conditions.

In an embodiment of the present disclosure, the teeth 10 are composed of steel. Steel is an inexpensive and strong material well suited for withstanding the high forces involved in the subsoiling process.

In an embodiment of the present disclosure, each of the one or more teeth 10 additionally comprise at least one exchangeable wear piece 15 configured to be replaced when worn down. The most exposed elements of each tooth 10 may thus be composed of or covered by elements that are easy to exchange once they have been worn down. This has the advantage of cost-efficiently and conveniently extending the lifetime of the subsoiling apparatus, since no expensive parts need to be replaced, while at the same time enabling the operator themselves to exchange the wear pieces 15 without the need for professional service. In a further embodiment, the tip 13 of each of the one or more teeth 10 is characterized by being a wear piece 15 configured to be replaced when worn down.

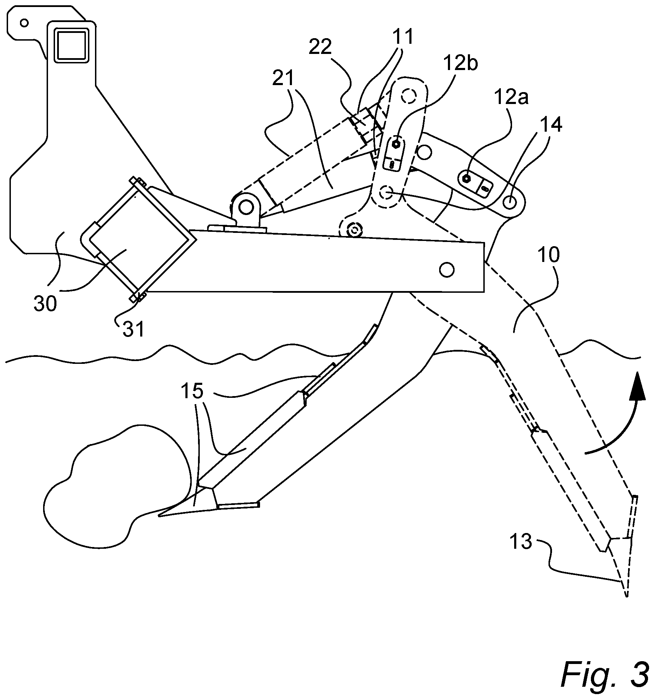

Fig. 3 is a schematic side view of a tooth 10 illustrating the operation of the mechanical overload protection system. In one embodiment of the present disclosure, the mechanical overload protection is an inexpensive shear bolt 12, which will break if the force perpendicular to its axis exceeds the strength of the shear bolt 12. The shear bolt 12 can then be chosen such that its strength is less than any force that would damage any part of the subsoiling apparatus 100. It can furthermore be chosen to correspond the conditions of the soil needing subsoiling and the power of the tractor by which it must be pulled. In a further embodiment of the present disclosure, each of the one or more teeth 10 is connected directly or indirectly to the piston 22 of the double-acting hydraulic actuator 20 by means of the shear bolt 12 and a stronger pivot bolt 14, such that the force from pulling the tooth 10 through the soil will cause the tooth 10 to pivot around the pivot bolt 14 and be lifted above the ground if the shear bolt 12 breaks (illustrated as the dashed lines in Fig. 3). This brings the tooth 10 out of danger. Subsequently, the tooth 10 can be lifted back to its normal position and the shear bolt 12 replaced.

## Claims

1. A subsoiling apparatus (100) comprising a frame (101) having at a front end thereof a coupling for connecting the subsoiling apparatus (100) to an agricultural tractor, wherein the subsoiling apparatus (100) comprises:
one or more teeth (10), each being arranged on the frame (101) pivotably between a transportation position thereof, wherein a tip (13) of the tooth (10) is directed towards the front end of the frame (101) and a working position, wherein the tip (13) of the tooth is directed downwardly from the frame (101),
an actuator (20), such as a double-acting hydraulic actuator comprising a cylinder (21) and a piston (22), for each of the teeth (10) arranged for shifting the tooth (10) from the transportation position and towards the working position,
wherein each tooth (10) is provided with a mechanical overload protection (12) designed to release the tooth (10) from the working position and allow it to pivot further from the transportation position than the working position thereof in case the mechanical load on the tooth (10) exceeds a given threshold value, and with a mechanical stop block (11) arranged to prevent the tooth (10) from pivoting further from the transportation position than the working position thereof provided that the mechanical overload protection of the tooth (10) has not released the tooth (10).

2. The subsoiling apparatus (100) according to claim 1, wherein at least one of the teeth (10) is mounted on the frame (30) by means of adjustable clamps (31) enabling the lateral position of the at least one of the teeth (10) on the frame (30) to be adjusted.

3. The subsoiling apparatus (100) according to any of the preceding claims, wherein the actuator (20) is a double-acting hydraulic actuator (20), and wherein for each of the teeth (10) the mechanical stop block (11) for controlling and maintaining the working position comprises an exchangeable muff (11) configured to be placed on the hydraulic piston (22) of the hydraulic actuator (20).

4. The subsoiling apparatus (100) according to claim 3, wherein the muff (11) comprises a plurality of sections (11a) that can be optionally inserted between the cylinder (21) and the tooth (10) to adjust the working position of the tooth (10).

5. The subsoiling apparatus (100) according to any of the preceding claims, wherein for each of the one or more teeth (10) the mechanical overload protection (12) comprises a shear bolt (12) configured to break if the force perpendicular to its axis exceeds the strength of the shear bolt (12), wherein the strength of the shear bolt (12) is configured to be below a force where any part of the subsoiling apparatus (100) is damaged.

6. The subsoiling apparatus (100) according to claim 5, wherein the actuator is a double-acting hydraulic actuator (20), and wherein each of the teeth (10) is connected directly or indirectly to the piston (22) of the double-acting hydraulic actuator (20) by means of the shear bolt (12) and a stronger pivot bolt (14), such that the force from pulling the tooth (10) through the soil will cause the tooth (10) to pivot around the pivot bolt (14) and be lifted above the ground if the shear bolt (12) breaks.

7. The subsoiling apparatus (100) according to any of the preceding claims, wherein the teeth (10) are composed of steel.

8. The subsoiling apparatus (100) according to any of the preceding claims, wherein each of the teeth (10) additionally comprises at least one exchangeable wear piece (15) configured to be replaced when worn down.

9. The subsoiling apparatus (100) according to claim 8, wherein the tip (13) of each of the teeth (10) comprises a wear piece (15) configured to be replaced when worn down.

10. The subsoiling apparatus (100) according to any of the preceding claims, comprising two or more teeth (10).

11. The subsoiling apparatus (100) according to claim 10, wherein the two or more teeth (10) can be transferred between the transportation position and the working position individually so that at least one tooth (10) can be in the transportation position while at least one tooth (10) is in the working position.

12. The subsoiling apparatus (100) according to any of the preceding claims, wherein the mechanical stop block (11) is configured to maintain a working angle (θ) of each of the one or more teeth in the range of 25° to 50°, such as in the range of 30° to 45°, such as in the range of 35° to 40°.

13. The subsoiling apparatus (100) according to claim 12, wherein the mechanical stop block (11) is configured to maintain the working angle (θ) of each of the one or more teeth at 37° ± 2°.

14. The subsoiling apparatus (100) according to any of the preceding claims, wherein each of the teeth (10) has a working depth (WD) in the range of 40 to 65 cm, such as in the range of 45 to 60 cm, such as in the range of 50 to 55 cm.

15. The subsoiling apparatus (100) according to claim 14, wherein each of the teeth (10) has a working depth (WD) of 55 cm ± 2 cm.
